# EUROPEAN PATENT SPECIFICATION

(11) **EP 1 961 352 B1**
(45) Date of publication and mention of the grant of the patent: **08.04.2009**
(21) Application number: 08150384.9
(22) Date of filing: 17.01.2008
(51) Int. Cl.: A47J 37/12

(54) **Improvement in an induction-heated cooking or frying machine**
Verbesserung an einer Induktionserhitzungskoch- oder Bratvorrichtung
Amélioration dans une machine de cuisson ou de friture à chauffage par induction

(30) Priority: 23.02.2007 IT PN20070015
(43) Date of publication of application: 27.08.2008
(73) Proprietor: ELECTROLUX PROFESSIONAL S.p.A., 33170 Pordenone (IT)
(72) Inventor: Baumann, Udo, D-22459 Hamburg (DE)
(74) Representative: Markovina, Paolo

(56) References cited:
- WO-A-90/03121
- WO-A-20/07010429
- DE-A1- 4 439 654
- DE-A1- 10 019 943
- DE-A1- 19 500 896

## Description

The present invention refers to an improved kind of induction-heated cooking machine or fryer adapted to cook or fry food in a particularly efficient and cost-effective manner.

The machines interested by the instant invention are those machines provided with a vessel filled with cooking liquid, which can be either water, or oil or other cooking means, and which use a perforated basket wherein the food is placed, which is then cooked or fried by dipping the basket, or an usual cooking pot provided with holes, inside the cooking bath contained by said vessel.
In the following the term "basket" will then comprise also any kind of pot or cooking container provided with proper holes.

Such machines, as intended in particular for use in commercial foodservice and mass catering applications, are adapted to carry out traditional cooking or frying processes aimed at cooking such food products as fish, meat, French fries and similar potato chips and the like, but also food products apt to be cooked in water, such as pasta, soups and the like.

The features and characteristics of these appliances are exhaustively described in the German patent application no. DE 4 439 654 filed by this same Applicant, to which reference should therefore be made for reasons of brevity.

Specially stressed here is the fact that the major advantage of an induction-heated cooking machine or deep-fat fryer lies in the circumstance that, if the cooking bath or the frying fat or oil bath is heated up to a stand-by temperature in a conventional manner, dipping a basket full of food items, which may be also deep-frozen food items still in their frozen state, as this on the other hand seems to be quite often the case in practice, into the cooking bath, causes the temperature thereof to decrease abruptly; however, bringing such temperature up to its starting value and subsequently increasing it further to the actual value required for frying cannot be done quick enough, since it takes a certain time for the oil bath thermostat to first of all detect said abrupt lowering of the bath temperature and - in the second place - for the electric heating element submerged in the same bath to - typically quite slowly, due to the considerable thermal inertia thereof - reach up to its steady-state operating temperature.

During such certainly not negligibly long period of time, the food dipped in the cooking or frying bath dwells at a temperature lying considerably below the optimum one that is required to ensure a best possible cooking or frying quality, thereby impairing the actual results obtained in the final quality of the frying process.

While substantially simple to implement and easily operable in view of obtaining an adequately quick temperature rise, using the technique based on induction heating, i.e. heating the bottom of the food holding basket by induction to heat up the frying bath, as disclosed in the above-cited patent application, is however connected to a number of practical drawbacks.

A first drawback is due to the fact that the induction coil placed below the cooking or frying vessel close to the bottom of the food holding basket, which is made of a ferritic material as required for it to be able to intercept and use the electromagnetic energy issued by the induction coil therebelow, practically causes the same bottom of the vessel to heat up sensibly.

As largely known in the art, during any regular food cooking or frying process food debris of various kind tend to usually come off the food being handled and to drop and settle onto the bottom of the vessel; if the latter is hot, i.e. at a high temperature, as it necessarily is in the case of the above-cited patent disclosure, such debris are subject to quick charring, thereby giving rise to the quite undesired drawback of having to replace the whole amount of cooking water or frying oil in the pan much more frequently, and this most obviously increases costs, maintenance demand, downtimes, energy usage in view of heating the new water or oil or fat up to frying temperature, and so on.

In addition, the circumstance that the induction coil is placed underneath the bottom of the vessel is practically prejudicial to the possibility for the cooking bath to be heated up and held at a so-called stand-by temperature when the basket holding the food to be cooked or fried is removed therefrom, owing to the distance existing between the same basket and the induction coil in this case.

In the specific case of a frying process only, the frying oil bath would only be heated up when the same basket is again dipped and fully submerged thereinto. Now, it can be most readily appreciated that this constraint practically causes not only frying times to become unacceptably long, but also the final frying quality to deteriorate to an equally unacceptable extent, especially in the case that the deep-fat fryer is not used on a continuous-duty basis, which in fact implies an initial cooling-down of the frying bath, which is largely known as being quite detrimental to the quality of frying that in fact requires the oil bath to only deviate just slightly and for a very short period of time from the optimum temperature situated between approx. 180°C and 200°C.

It would therefore be desirable, and it is a main object of the present invention, actually, to provide a cooking machine or especially a deep-fat fryer of the above-indicated kind, which is effective in doing away with the above-noted drawbacks, and is provided with induction heating means adapted to ensure a satisfactorly steep and quick temperature rise of the cooking water or frying oil bath, a substantial energy saving effect, along of course with an excellent cooking or frying quality, without any need arising for the cooking water or the frying oil bath to be replaced too frequently.

According to the present invention, these aims and advantages are reached in a cooking machine or deep-fat fryer, in particular intended for use in commercial foodservice and mass catering applications, incorporating the features as defined and recited in the appended claims.

Features and advantages of the present invention will anyway be more readily understood from the description that is given below by way of non-limiting example with reference to the accompanying drawings, in which:
- Figure 1 is a symbolical front elevational cross-sectional view of a deep-fat fryer according to the prior art;
- Figure 2 is an equally symbolical front elevational cross-sectional view of a cooking machine or deep-fat fryer according to the present invention;
- Figure 3 is an outer perspective view of an improved embodiment of a vessel of the machine shown in Figure 2;
- Figure 4 shows the view of fig. 2, with the symbolical representation of an induction coil and of the portion of the vessel it is mounted to,
- Figure 5 shows a symbolic view of a specific and improved embodiment of a machine according to the invention,
- Figure 5A shows the electric schematic of the power supply circuits of the coils shown in fig. 5,
- Figure 6 is a diagrammatical view of the temperature course patterns of the frying bath in a fryer according to the present invention and in a fryer according to the prior art;
- Figure 7 is a symbolical front elevational cross-sectional view of a cooking machine or deep-fat fryer according to a further improved embodiment of the present invention,
- Figure 8 shows a simplified perspective view of a cylindrical vessel and of the portion of the vertical wall, the induction coil is mounted to,
- Figure 9 shows a vertical and sectional view of a different embodiment of vessel containing the cooking or frying bath.

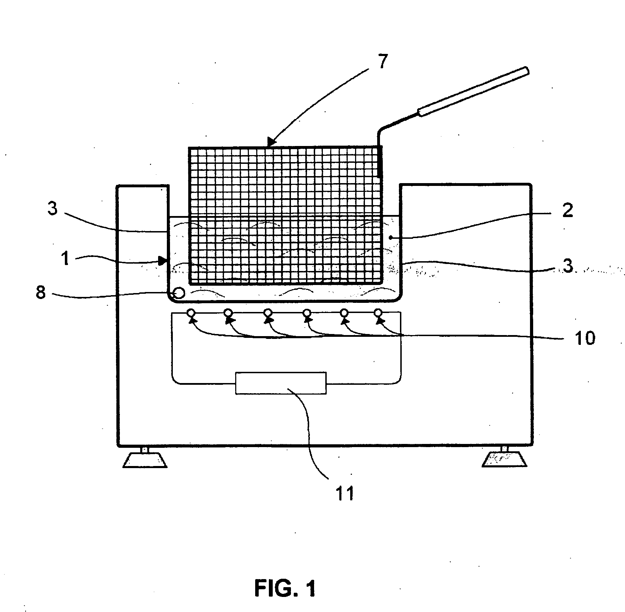

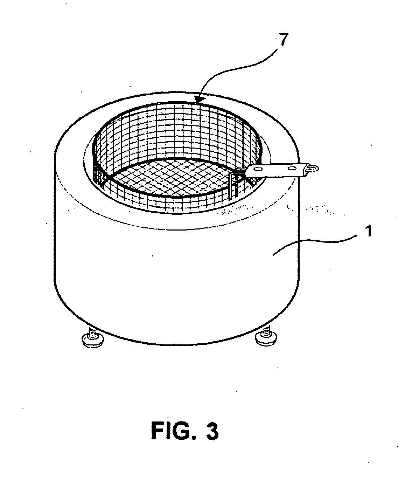

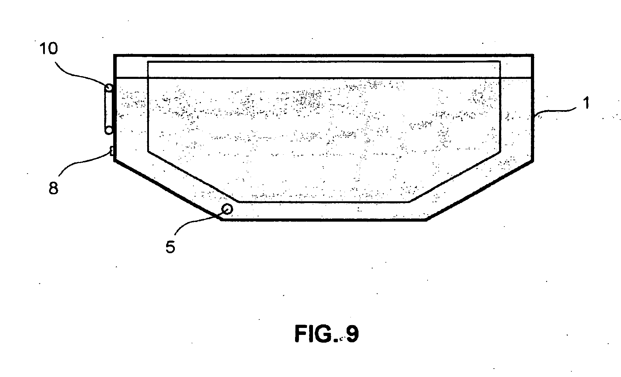

An appliance for cooking food in a water or oil bath, i.e. frying food, according to the prior art (Figure 1) generally comprises:
- a frying vessel 1 containing a frying bath 2, wherein the vessel 1 is implemented with a sole vertical wall closed as a cylinder (fig. 3), or with a plurality of vertical and variously inclined walls, as shown in fig. 9,
- a perforated metal basket 7 of a type generally known as such in the art, adapted to be dipped in said vessel and submerged in the oil bath contained therein,
- heating means adapted to heat up the frying bath 2,
- means 8 adapted to detect the temperature of the frying bath 2.

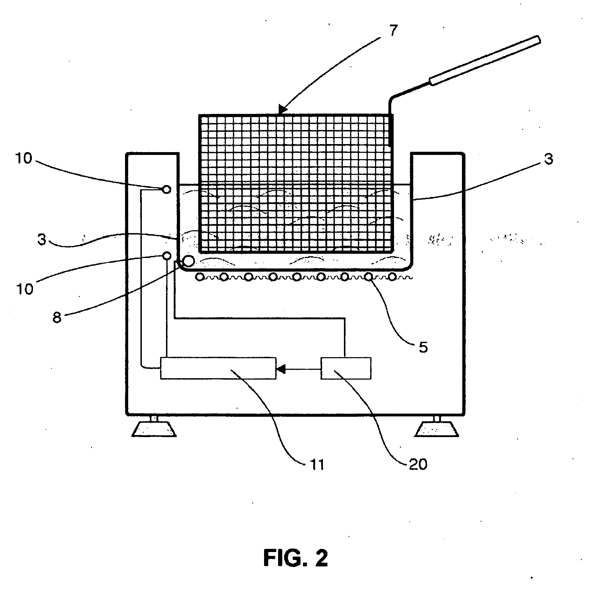

According to the present invention, and with reference to Figures 2, 7 and 8, on the outward facing side of the cylindrical vertical wall, or on one of said vertical walls there is placed an induction coil 10, which is arranged vertically so that the axis thereof is oriented with an horizontal component, and towards the centre of the frying bath 2.

This induction coil 10 is powered through an appropriate driver unit 11 adapted to both generate a voltage at an appropriate, pre-determined frequency, as this is largely known as such in the art, and transfer said voltage to the induction coil 10.

For it to be able to receive and convert the energy issued and transmitted by said induction coil 10, the food holding basket 7 is made of a ferritic material, e.g. AISI 430 stainless steel.

As a result, it clearly appears that, when the induction coil 10 is powered with an appropriate electric voltage at such frequency as typically used for induction heating applications, and when said food holding basket 7 - properly made of a ferritic material - is dipped in the oil bath contained in said frying vessel 1, at least a wall of said food holding basket comes then to be positioned in front of said induction coil 10, thereby being fully exposed to the electromagnetic field generated by and propagating from said coil, linking with the relevant electromagnetic flux therefrom emitted.

As an obvious, naturally occurring result of this circumstance, the basket is heated up and such heat is naturally transferred to the oil bath (or water bath in case of cooking) in which the basket is submerged, thereby automatically causing the temperature of such bath to rise, exactly as desired.

Furthermore, the above-described configuration is such as to allow for a number of basic improvements that are effective in enabling the drawbacks described afore with reference to the prior-art patent disclosure to be avoided.

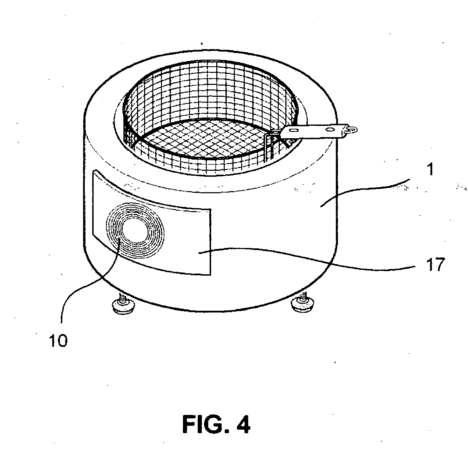

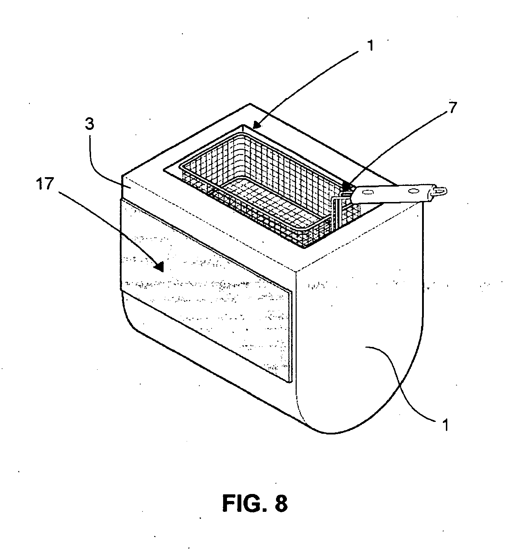

A first such improvement (figures 4, 8) lies in the fact that at least a portion 17 of the vertical wall 3 of the vessel 1, behind which there is arranged said induction coil 10, is made of a diamagnetic material, which of course must also be heat-resistant, so as to ensure that the electromagnetic field generated by and propagating from said coil is not screened and/or attenuated by the same wall 3, but is on the contrary able to reach the basket 7 in a substantially unhindered manner.

Preferably, said wall 3 - or at least the portion thereof that is positioned in front of the food holding basket - is made of glass-ceramics.

A second improvement is aimed at tackling the problem arising from the fact that, if the frying oil (or cooking water) bath is heated up from ambient temperature to the working temperature, - which may be about 100°C , and that in the case of a frying process is approx. 180°C - by the sole induction heating effect of the food holding basket, then the time required for the oil bath to be brought up to such temperature would just be unacceptably too long.

In view of solving this problem, such second improvement therefore consists in the pre-heating, and in the maintaining at a temperature defined as *stand-by,* which is adequately lower than the actual frying temperature thereof- the frying bath. The same frying bath will then be brought up to the desired frying temperature of approx. 180°C by the sole effect of having the food holding basket dipped thereinto and, as a result, only when the actual frying temperature is really required.

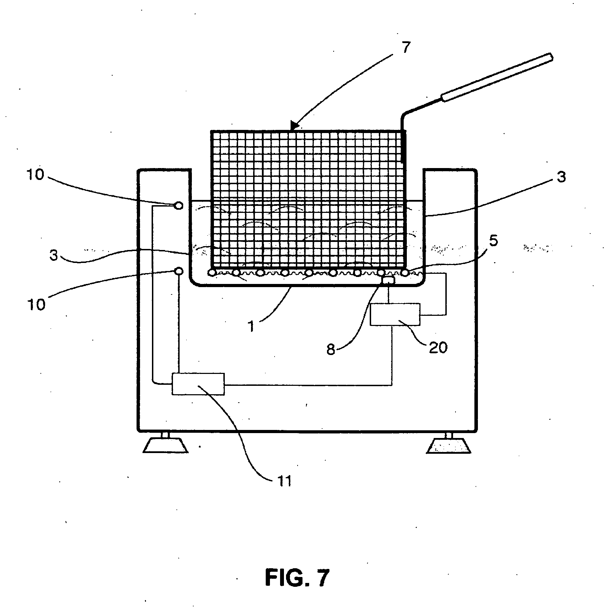

Therefore, inside the pan 1 - and thus submerged in the oil bath - there is provided an electric heating element 5 (see fig. 7) to be powered and controlled in a manner as widely known as such in the art.

Alternatively said heating resistance 5 may be arranged just outside the vessel, even in this case in a manner well known in the art.

The driver unit 11 is able of supply said resistance 5 in order that the temperature of the bath 2 is constantly held at a value situated within a pre-determined temperature range T_{A} - T_{B}, within which there is preferably situated the selected stand-by temperature value.

A third improvement is based on the fact that, inside said frying pan 1, the afore-cited temperature detection means 8 are arranged to send their electric signal to a control unit, which is conventionally indicated at 20 in the Figures.

Obviously it may be foreseen that said means 8 able of detecting the bath temperature are placed outside the vessel, but also said embodiment is known in the art, and therefore it will not be further explained.

According to this third improvement, said control unit 20 is also adapted to control the afore-cited driver unit 11 powering the coil 10, so that said driver 11 is prevented from working when the temperature becomes higher than a pre-defined value T2.

As it can most readily be appreciated, this improvement enables the temperature of the frying bath to be prevented from becoming too high owing to the effect of induction heating.

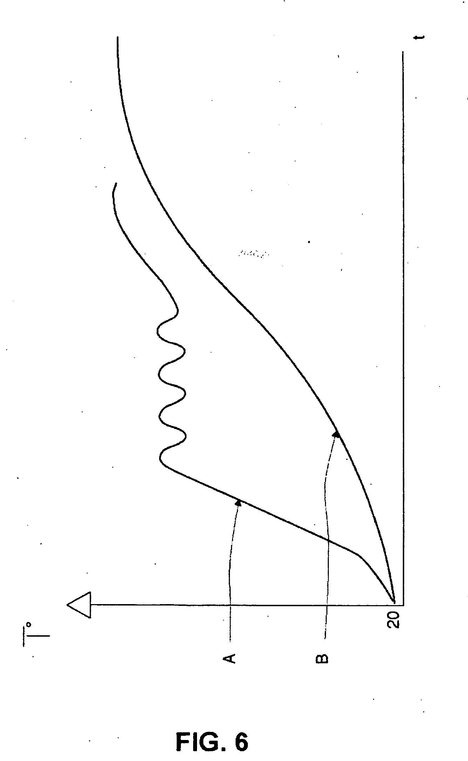

Basically, all these improvements enable the rise pattern of the cooking or frying bath temperature - after the stand-by heating element 5 is energized and the food holding basket is dipped into the same bath (the induction coil 10 is of course energized before that, but its action has obviously no effect on the temperature of the frying bath as long as the food holding basket is not dipped thereinto) - is as shown in Figure 6. In this Figure it can be noticed that the curve "A" illustrates the typical temperature pattern in a machine according to the present invention, whereas the curve "B" represents a same temperature pattern as is typical - all other conditions and parameters being equal - of a deep-fat fryer according to the afore-cited patent publication DE 4 439 654, i.e. not provided with a stand-by heating element.

Those skilled in the art will certainly be able to most readily appreciate the advantage offered by the cooking or frying process according to the pattern A over the cooking or frying process according to the pattern B in terms of quick response.

In practice, the present invention represents an ideal trade-off, i.e. enables an ideal compromise to be reached, in terms of both energy saving effects and quick operating response, between the cooking or frying performances of the various prior-art techniques, without incurring any penalty in terms of quality of the cooking or frying results.

Another decisive factor needs furthermore to be considered: in fact, if the basket holding the food to be cooked or fried is dipped into a frying bath that is already heated up at the stand-by temperature, as it usually occurs in prior-art machines, then the temperature of the same bath is caused to lower abruptly by the effect of the thermal inertia of both the basket and the food, and needs therefore to be subsequently heated up again to working value by the heating element being energized accordingly. However, the time needed by the temperature detecting means 8 to detect the occurrence of such temperature decrease in the cooking or frying bath, as added to the time needed for the heating element 5 to actually start heating up the water or oil bath again (it should be recalled here that heating elements of this kind have in all cases a quite significant thermal inertia of their own), results in rather long an aggregate time needed for the bath temperature to be restored to the initial value thereof.

If on the other hand a machine according to the present invention is used, the time needed for the bath temperature to be restored to the initial value thereof is definitely shortened owing to a couple of circumstances, i.e.:
- a first circumstance consisting of the fact that the basket heating effect starts as soon as the same basket is dipped into the bath, as compared with the formerly considered case, in which a time delay introduced by the overall thermal inertia of the bath had on the contrary to be accepted for such basket heating action to be able to start, actually;
- a second circumstance - connected to the first one - consisting of the fact that the temperature of the basket 7 and, therefore, of the water or oil bath starts to rise immediately upon the basket itself being dipped thereinto, differently from the formerly considered case, in which a time delay introduced by:
   > both the time needed for the bath cooling-down effect to propagate all over the bath
   > and the thermal inertia of the heating element,
   had on the contrary to be added and accepted for such basket heating action to be able to start, actually.

Conclusively, it can therefore be stated that a time delay needed for the basket to be able to heat up and give off heat to the cooking or frying bath is practically reduced to nil by the fact that the food holding basket itself acts as a heating element that is energized immediately upon being dipped into the bath.

A fourth improvement is originated from the requirement that, as the food to be cooked may be presented in different quantities, and of different types, they obviously may require some baskets with different depths.

Of course such a situation is scarcely satisfied with the presence of only one induction coil, as it may regard only the lower part of the vessel, when on the contrary the basket made of ferromagnetic material may be short enough as not to reach the vessel bottom.

It is then apparent that in such a case the electromagnetic linking between the coil and the basket is poor, with obvious and negative consequences on the ability of heating the bath within acceptable time lengths.

Even in the opposite case, when the basket is deep and the coil is in high position, some similar drawbacks, although less heavy, may be experienced.

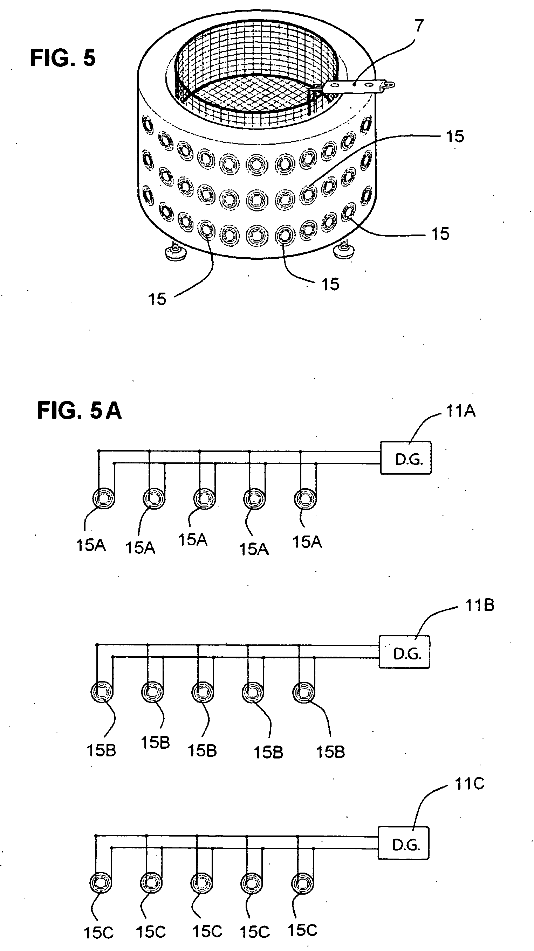

In order to avoid such problems, and with ref. to fig. 5, a number of separate coils 15A, 15B, 15C... are being mounted, on the outer wall of the vessel, and they are distributed in a regular way, especially in height.

In such a way an electromagnetic field, extended over almost the whole vessel height, is generated; which assures that the electromagnetic flux be linked to a basket showing any size, also very different from each other.

Said embodiment obviously allows an optimum basket heating, whichever be its depth inside the vessel, with obvious benefits on the cooking quality and time. In the present embodiment said coils can be supplied both separately and in parallel, without that this circumstance may generate different performances, all other conditions being the same.

Moreover such solution does suggest a further advantageous improvement: in the fact, and with ref. to fig. 5 and 5A, said induction coils 15A, 15B, 15C are being distributed, outside the vessel, for its the whole height, and are grouped among them in such a way to create a number of distinct groups of coils, wherein the coils belonging to a same group are positioned about at the same height with respect to the vessel.

In such a situation it results to be convenient to provide the cooking machine with a number of driver generators 11A, 11B, 11C... equal to the number of such groups, and to connect in parallel the coils of a same group to the same driver generator, and to that one only.

And the same procedure applies also for the coils of the other groups, so that at the end a configuration is obtained, according to which the coils at a same defined height are being driven by a same and sole driver generator, the coils at a different height are driven by a different and respective drive generator, and so on.

Obviously all said driver generators can be driven singularly and independently .

Therefore the particular mode of functioning is obtained in which, according to the basket depth, it is possible to activate the coils belonging to that group, or also to more than one group, which extend for that height corresponding to the depth which the basket bottom can reach.

It is apparent the advantage of such solution, allowing to concentrate the energy exactly where it is needed, avoiding useless energy wastage in eddy currents by those driver generators which would supply some coils not involved by the basket position.

## Claims

1. Cooking or frying machine, as particularly intended for commercial foodservice and mass catering applications, comprising:
- a cooking or frying vessel (1) containing a bath (2) of water or frying oil or fat, this vessel being formed by one vertical cylindrical wall, or delimited by at least a plurality of vertical and variously inclined walls,
- heating means adapted to heat up said bath of water or frying oil or fat in a controllable manner,
- a perforated basket (7) adapted to receive and hold the food to be cooked/fried, and to be selectively dipped into and removed from said vessel, **characterized in that** said heating means comprise:
- at least one induction coil (10) provided on the outside of and immediately behind a vertical wall of said basket, and oriented so that the axis of the electromagnetic flux generated by said coil is directed at the interior of said frying or cooking vessel in a substantially horizontal direction,
- an appropriate electric-frequency driver generator (11) adapted to generate an electric voltage that is transmitted to said induction coil,
- and further **characterized in that** said perforated basket is made of diamagnetic material, and preferably of ferromagnetic material.

2. Cooking or frying machine according to claim 1, **characterized in that** at least the portion of said wall that faces the respective induction coil (10) is made of a magnetically transparent and heat-resistant material, such as preferably glass-ceramics or aluminium.

3. Cooking or frying machine according to claim 1 or 2, **characterized in that** said heating means include an electric heating element (5) provided inside or outside said cooking vessel.

4. Cooking or frying machine according to claim 3, **characterized in that** said vessel is provided internally or externally with a temperature detection means (8) for detecting the temperature of the bath.

5. Cooking or frying machine according to claim 4, **characterized in that** said temperature detection means (8) and said electric heating element (5) are connected to a common control unit (20), which is adapted to automatically energize/de-energize said electric heating element (5) so as to hold the temperature of the cooking or frying bath within a pre-determined temperature range (T_{A} - T_{B}).

6. Cooking or frying machine according to claim 5, **characterized in that** said control unit (20) is adapted to automatically de-activate said induction coil (10) from operation when the bath temperature is detected to be higher than a pre-set value (T2).

7. Cooking or frying machine according to any of the previous claims, **characterized in that** a plurality of induction coils (15A, 15B, 15C) is provided, and that said coils are placed at respective different heights with respect to the vessel bottom.

8. Cooking or frying machine according to claim 7, **characterized in that:**
- said coils are grouped into a number of separate groups (15A) (15B) (15C),
- the coils belonging to the same group are placed substantially at the same height with respect to the height of the coils belonging to different groups,
- a plurality of drive generators (11 A, 11B, 11 C) is provided, each of said driver generators being connected in parallel to one or more of the coils belonging to the same and respective of said groups (15A) (15B) (15C).

## Patentansprüche

1. Koch- oder Bratgerät, insbesondere für Anwendungen in der kommerziellen Nahrungsmittelzubereitung und im kommerziellen Catering, Folgendes umfassend:
- ein Koch- oder Bratgefäß (1), das ein Bad (2) aus Wasser oder Bratöl oder Bratfett enthält, wobei das Gefäß durch eine vertikale zylindrische Wand gebildet oder durch mindestens eine Mehrzahl vertikaler und unterschiedlich geneigter Wände begrenzt ist;
- ein Heizmittel, das dazu geeignet ist, das Wasser-, Bratöl- oder Bratfettbad auf kontrollierbare Art und Weise zu erhitzen;
- einen perforierten Korb (7), der geeignet ist, die zu kochenden bzw. bratenden Nahrungsmittel aufzunehmen und zu bewahren, und der wahlweise in das Gefäß getaucht und aus diesem herausgenommen werden kann, **dadurch gekennzeichnet, dass** das Heizmittel Folgendes umfasst:
- mindestens eine Induktionsspule (10), die an der Außenseite und unmittelbar hinter einer vertikalen Wand des Korbes angebracht und so ausgerichtet ist, dass die Achse des von der Spule generierten elektromagnetischen Flusses im wesentlichen in einer horizontalen Richtung auf das Innere des Brat- oder Kochgefäßes gerichtet ist;
- einen geeigneten Elektrofrequenz-Antriebsgenerator (11), der geeignet ist, eine elektrische Spannung zu erzeugen, die auf die Induktionsspule übertragen wird;
- und ferner **dadurch gekennzeichnet, dass** der perforierte Korb aus diamagnetischem Material, vorzugsweise aus ferromagnetischem Material gemacht ist.

2. Koch- oder Bratgerät gemäß Anspruch 1, **dadurch gekennzeichnet, dass** zumindest der Teil der Wand, der der entsprechenden Induktionsspule (10) zugewandt ist, aus einem magnetisch durchlässigen und hitzebeständigen Material gemacht ist, zum Beispiel vorzugsweise aus Glaskeramik oder Aluminium.

3. Koch- oder Bratgerät gemäß Anspruch 1 oder 2, **dadurch gekennzeichnet, dass** das Heizmittel ein elektrisches Heizelement (5) umfasst, das innerhalb oder außerhalb des Kochgefäßes vorgesehen ist.

4. Koch- oder Bratgerät gemäß Anspruch 3, **dadurch gekennzeichnet, dass** das Gefäß innen oder außen mit einem Temperaturmessmittel (8) zum Feststellen der Temperatur des Bades ausgestattet ist.

5. Koch- oder Bratgerät gemäß Anspruch 4, **dadurch gekennzeichnet, dass** das Temperaturmessmittel (8) und das elektrische Heizelement (5) zu einer gemeinsamen Steuereinheit (20) verbunden sind, die geeignet ist, das elektrische Heizelement (5) automatisch ein- und auszuschalten, um die Temperatur des Koch- oder Bratbades in einem bestimmten Temperaturbereich (T_{A} - T_{B}) zu halten.

6. Koch- oder Bratgerät gemäß Anspruch 5, **dadurch gekennzeichnet, dass** die Steuereinheit (20) geeignet ist, die Induktionsspule (10) automatisch zu deaktivieren, wenn festgestellt wird, dass die Bad-Temperatur über einem eingestellten Wert (T2) liegt.

7. Koch- oder Bratgerät gemäß einem der vorangehenden Ansprüche, **dadurch gekennzeichnet, dass** eine Mehrzahl von Induktionsspulen (15A, 15B, 15C) vorgesehen ist und dass die Spulen mit Bezug auf den Gefäßboden in unterschiedlichen Höhen angeordnet sind.

8. Koch- oder Bratgerät gemäß Anspruch 7, **dadurch gekennzeichnet, dass:**
- die Spulen in eine Anzahl getrennter Gruppen (15A) (15B) (15C) aufgeteilt sind,
- die zu der selben Gruppe gehörenden Spulen im wesentlichen in der selben Höhe mit Bezug auf die Höhe der zu unterschiedlichen Gruppen gehörenden Spulen angeordnet sind,
- eine Mehrzahl von Antriebsgeneratoren (11A, 11B, 11C) vorgesehen ist, wobei jeder der Antriebsgeneratoren parallel mit einer oder mehreren Spulen verbunden ist, die zu der selben und entsprechenden Gruppe (15A) (15B) (15C) gehören.

## Revendications

1. Machine de cuisson ou de friture, destinée en particulier à des applications de service alimentaire de collectivité et de restauration collective, comprenant :
- une cuve de cuisson ou de friture (1) contenant un bain (2) d'eau ou d'huile de friture ou de graisse, cette cuve étant formée par une paroi cylindrique verticale, ou délimitée par au moins une pluralité de parois verticales et de parois diversement inclinées,
- des moyens de chauffage adaptés pour chauffer ledit bain d'eau ou d'huile de friture ou de graisse d'une manière contrôlable,
- un panier perforé (7) adapté pour recevoir et contenir la nourriture à cuire/frire, et pour être, de manière sélective, plongé dans ladite cuve et retiré de celle-ci, **caractérisée en ce que** lesdits moyens de chauffage comprennent :
- au moins une bobine d'induction (10) prévue sur l'extérieur et immédiatement à l'arrière d'une paroi verticale dudit panier, et orientée de sorte que l'axe du flux électromagnétique généré par ladite bobine soit dirigé vers l'intérieur de ladite cuve de friture ou de cuisson dans une direction sensiblement horizontale,
- un générateur de commande de fréquence électrique (11) approprié adapté pour générer une tension électrique qui est transmise à ladite bobine d'induction,
- et **caractérisée en outre en ce que** ledit panier perforé est réalisé en un matériau diamagnétique, et de préférence en un matériau ferromagnétique.

2. Machine de cuisson ou de friture selon la revendication 1, **caractérisée en ce qu'**au moins la partie de ladite paroi qui fait face à la bobine d'induction (10) respective est réalisée en un matériau magnétiquement transparent et résistant à la chaleur, tel que, de préférence, la vitrocéramique ou l'aluminium.

3. Machine de cuisson ou de friture selon la revendication 1 ou 2, **caractérisée en ce que** lesdits moyens de chauffage comprennent un élément chauffant électrique (5) prévu à l'intérieur ou à l'extérieur de ladite cuve de cuisson.

4. Machine de cuisson ou de friture selon la revendication 3, **caractérisée en ce que** ladite cuve est pourvue intérieurement ou extérieurement de moyens de détection de température (8) pour détecter la température du bain.

5. Machine de cuisson ou de friture selon la revendication 4, **caractérisée en ce que** lesdits moyens de détection de température (8) et ledit élément chauffant électrique (5) sont connectés à une unité de commande (20) commune, qui est adaptée pour alimenter/ne plus alimenter ledit élément chauffant électrique (5) de manière à maintenir la température du bain de cuisson ou de friture dans une plage de température prédéterminée (T_{A} - T_{B}).

6. Machine de cuisson ou de friture selon la revendication 5, **caractérisée en ce que** ladite unité de commande (20) est adaptée pour désactiver automatiquement le fonctionnement de ladite bobine d'induction (10) lorsque la température du bain est détectée comme étant supérieure à une valeur prédéterminée (T2).

7. Machine de cuisson ou de friture selon l'une quelconque des revendications précédentes, **caractérisée en ce qu'**une pluralité de bobines d'induction (15A, 15B, 15C) sont prévues, et **en ce que** lesdites bobines sont placées à différentes hauteurs respectives par rapport au fond de la cuve.

8. Machine de cuisson ou de friture selon la revendication 7, **caractérisée en ce que** ;
- lesdites bobines sont groupées en un certain nombre de groupes (15A) (15B) (15C) séparés,
- les bobines appartenant au même groupe sont placées sensiblement à la même hauteur par rapport à la hauteur des bobines appartenant à des groupes différents,
- une pluralité de générateurs de commande (11A, 11B, 11C) sont prévus, chacun desdits générateurs de commande étant connecté en parallèle à une ou plusieurs des bobines appartenant au même groupe respectif desdits groupes (15A) (15B) (15C).
